# EUROPÄISCHE PATENTANMELDUNG

(11) **EP 2 848 793 A1**
(43) Veröffentlichungstag der Anmeldung: **18.03.2015**
(21) Anmeldenummer: 13184649.5
(22) Anmeldetag: 16.09.2013
(51) Int. Cl.: F02D 41/30, F02D 19/10, F02D 41/00

(54) **Verfahren zum Betreiben einer Brennkraftmaschine und Brennkraftmaschine**

(71) Anmelder: Flamina Holding AG, 6304 Zug (CH)
(72) Erfinder: May, Michael, CH-6304 Zug (CH)
(74) Vertreter: Rutz & Partner

(57) **Zusammenfassung**

Das Verfahren dient dem Betreiben einer insbesondere in Automobilen einsetzbaren Brennkraftmaschine (1), die wenigstens einen Kolben (10), einen Hubkolben oder einen Drehkolben, aufweist, mittels dessen ein Brennstoff-Luft-Gemisch (G+S) in einem Brennraum (19) verdichtet wird und anschliessend gezündet wird, wobei ein gasförmiger erster Brennstoff (G) und Luft (S) gemischt oder ungemischt in den Brennraum (19) einführbar sind, um das Brennstoff-Luft-Gemisch (G+S) bereit zu stellen. Erfindungsgemäss wird dem im Brennraum (19) vorliegenden verdichteten Brennstoff-Luft-Gemisch (G+S) ein zweiter Brennstoff (D) zugeführt, welcher eine höhere Zündneigung aufweist als der erste Brennstoff (G) und durch den das mit dem zweiten Brennstoff (D) ergänzte Brennstoff-Luft-Gemisch (G+S) gezündet wird.

## Beschreibung

Die Erfindung betrifft ein Verfahren zum Betreiben einer Brennkraftmaschine und eine Brennkraftmaschine, insbesondere eine Brennkraftmaschine für Automobile.

Brennkraftmaschinen arbeiten nach unterschiedlichen Betriebsverfahren. Die am meisten verbreiteten Betriebsverfahren sind der Dieselprozess und der Ottoprozess. Diese Verfahren sowie die entsprechenden Maschinen sind z.B. in Heinz Grohe, Gerhard Russ, Otto- und Dieselmotoren: Arbeitsweise, Aufbau und Berechnung von Zweitakt- und Viertakt-Verbrennungsmotoren, 15. Auflage, Würzburg 2010, beschrieben.

Beim Dieselprozess erfolgt eine innere Gemischbildung und eine Selbstentzündung des Kraftstoffes durch die hohe Temperatur der Verbrennungsluft bei Verdichtungsende. Die Einspritzung des Kraftstoffs erfolgt im oberen Totpunkt des Kolbens nach Verdichtungsende (siehe [1], Kapitel 5.1.2, Seite 72, »Selbstzündung«, und Kapitel 7.2, Seite 131, »Gemischbildung beim Dieselmotor«).

Beim Ottoprozess erfolgt eine innere Gemischbildung bei einem »Direkteinspritzer« während des Verdichtungstaktes oder eine äussere Gemischbildung in einem Vergaser oder individuell in den Saugrohren der Zylinder und eine Fremdzündung des Kraftstoffs durch Zündkerzen (siehe [1], Kapitel 5.1.1, Seite 71, »Fremdzündung«, und Kapitel 7.1, Seite 95, »Gemischbildung beim Ottomotor«).

Die beiden Verfahren unterscheiden sich durch das realisierbare Verdichtungsverhältnis, nämlich das Verhältnis des gesamten Zylinderraumes vor der Verdichtung zum verbliebenen Raum nach der Verdichtung. Bei höherem Verdichtungsverhältnis ist sowohl beim Dieselprozess als auch beim Otto Prozess der Wirkungsgrad höher (siehe [1], Kapitel 3.6, Seite 62, »Wirkungsgrad«).

Die erreichbare Höhe der Verdichtung ist hingegen durch den Effekt des »Klopfens« beschränkt, welches bei einer unkontrollierten Verbrennung oder einer Selbstzündung des Kraftstoffs bei hoher Temperatur und hohem Druck entsteht. Bei einer zu hohen Verdichtung wird die sogenannte »Klopfgrenze« überschritten, weshalb in [2], DE102011114259A1, ein Verfahren für eine Brennkraftmaschine vorgeschlagen wird, bei dem durch Änderung des Dichtungsverhältnisses ein Betrieb stets nahe unterhalb der »Klopfgrenze« möglich wird.

Der Dieselprozess erfordert aufgrund der vorgesehenen Selbstzündung ein höheres Verdichtungsverhältnis als der Ottoprozess. Zudem sollte der Kraftstoff eine höhere Zündneigung aufweisen als der beim Ottoprozess verwendete Kraftstoff.

Gasförmige Brennstoffe, wie Biogas, Erdgas, Butangas oder Propangas, weisen eine hohe Selbstzündtemperatur, eine niedrige Dichte und eine hohe Komplexität auf, weshalb diese Brennstoffe in einem Dieselprozess nicht verarbeitet werden können. Hingegen können diese Brennstoffe vorteilhaft in Brennkraftmaschinen eingesetzt werden, die nach dem Prinzip des Ottoprozesses mit Fremdzündung arbeiten.

Die Leistungsregelung bei der Nutzung gasförmiger Brennstoffe in Ottomotoren erfordert aufgrund der relativ engen Zündgrenzen eine Steuerung oder Regelung der Füllung durch Drosselung der Zufuhr des Brennstoff-Luft-Gemischs. Aufgrund der resultierenden Drosselverluste und Ansaugverluste wird insbesondere im Teillastbetrieb, bei dem die Drosselelemente aktiv sind, der spezifische Treibstoffverbrauch erhöht, weshalb ein relativ hoher Verbrauch resultiert.

Der vorliegenden Erfindung liegt daher die Aufgabe zugrunde, ein verbessertes Verfahren zum Betreiben einer Brennkraftmaschine anzugeben und eine verbesserte Brennkraftmaschine zu schaffen.

Insbesondere ist ein verbessertes Verfahren zum Betreiben einer Brennkraftmaschine anzugeben, welches erlaubt, gasförmige Brennstoffe vorteilhaft zu nutzen.

Insbesondere soll ein Brennstoff-Luft-Gemisch mit engen Zündgrenzen genutzt werden können, das eine geringe Zündneigung aufweist und durch einen Zündfunken kaum entzündbar ist. Vorzugsweise sollen Brennstoff-Luft-Gemische verwendbar sein, die einen hohen Luftanteil bzw. ein hohes Verbrennungsluftverhältnis λ aufweisen, das vorzugsweise grösser als 1.2 ist.

Erfindungsgemässe Brennkraftmaschinen sollen mit einem hohen Verdichtungsverhältnis und einem hohen Wirkungsgrad arbeiten. Drosselverluste und Ansaugverluste sollen vorzugsweise vermieden werden.

Mittels des erfindungsgemässen Verfahrens sollen zudem ein reduzierter Kraftstoffverbrauch und ein reduzierter Schadstoffausstoss erzielt werden.

Störungen, wie Zündaussetzer oder »Klopfen« und »Klingeln« sowie entsprechende Belastungen der Brennkraftmaschine, die zu Motorschäden führen können, sollen vermieden werden.

Erfindungsgemässe Brennkraftmaschinen sollen zudem einfach aufgebaut sein und möglichst keine Vorrichtungsteile aufweisen, die Wartung benötigen oder eine begrenzte Lebensdauer aufweisen.

Weiterhin sollen erfindungsgemässe Brennkraftmaschinen bereits im Bereich tiefer Drehzahlen ein hohes Drehmoment bereitstellen können.

Das erfindungsgemässe Verfahren soll zudem in erfindungsgemässen Brennkraftmaschinen angewendet werden können, die Hubkolben oder Kreiskolben aufweisen.

Diese Aufgabe wird mit einem Verfahren und einer Brennkraftmaschine gelöst, welche die in Anspruch 1 bzw. 13 angegebenen Merkmale aufweisen. Vorteilhafte Ausgestaltungen der Erfindung sind in weiteren Ansprüchen angegeben.

Das Verfahren dient dem Betreiben einer Brennkraftmaschine, die wenigstens einen Kolben, einen Hubkolben oder einen Drehkolben, aufweist, mittels dessen ein Brennstoff-Luft-Gemisch in einem Brennraum verdichtet wird und anschliessend gezündet wird, wobei ein gasförmiger erster Brennstoff und Luft gemischt oder ungemischt in den Brennraum einführbar sind, um das Brennstoff-Luft-Gemisch bereit zu stellen.

Erfindungsgemäss wird dem im Brennraum vorliegenden verdichteten Brennstoff-Luft-Gemisch ein zweiter Brennstoff zugeführt, welcher eine höhere Zündneigung aufweist als der erste Brennstoff und durch den das mit dem zweiten Brennstoff ergänzte Brennstoff-Luft-Gemisch gezündet wird.

Der gasförmige erste Brennstoff und Luft werden über getrennte Kanäle oder gemischt über einen gemeinsamen Kanal in den Brennraum eingeführt werden. Der zweite Brennstoff wird über eine oder mehrere Einspritzdüsen in den Brennraum ein gespritzt, die je eine oder mehrere Austrittsöffnungen aufweisen. Beispielsweise wird nur eine Einspritzdüse vorgesehen, die 4-6 Austrittsöffnungen aufweist, durch die der zweite Brennstoff gleichmässig verteilten in den Brennraum eingespritzt werden kann.

Der gasförmige erste Brennstoff und der zweite Brennstoff sind vorzugsweise über Ventile direkt oder indirekt in den Brennraum einführbar. Die Ventile werden von einer Steuereinheit angesteuert, die gegebenenfalls auch die Luftzufuhr steuert. Die vorliegende Erfindung erlaubt es jedoch, auf eine Drosselung der Luftzufuhr zu verzichten, so dass der erste Brennstoff besonders mager, d.h. mit einem hohen Luftanteil in den Brennraum eingeführt werden kann. Ansaugverluste können daher vermieden werden.

Die erfindungsgemässe Brennkraftmaschine kann daher mit einem hohen Verdichtungsverhältnis und mageren Brennstoffen effizient und sparsam betrieben werden.

Die erfindungsgemässe Brennkraftmaschine kann magere Brennstoff-Luft-Gemische bzw. Brennstoffgemische mit hohem Verbrennungsluftverhältnis λ verarbeiten. Aufgrund der geringen Zündneigung dieser Kraftstoffgemische werden »Klopfen« und »Klingeln« auch bei hohen Dichtungsverhältnissen vermieden, weshalb Brennkraftmaschinen mit hohem Verdichtungsverhältnis realisiert werden können.

Die erfindungsgemässe Brennkraftmaschine kann daher mit einem hohen Verdichtungsverhältnis und »mageren« Brennstoffen effizient und sparsam betrieben werden.

Das Verdichtungsverhältnis der Brennkraftmaschine wird derart gewählt, dass das Brennstoff-Luft-Gemisch bestehend aus dem gasförmigen ersten Brennstoff und Luft wenigstens so hoch komprimiert wird, dass die Selbstzündtemperatur des zweiten Brennstoffs sicher erreicht ist. Beispielsweise wird der Wert des Verdichtungsverhältnisses um den Faktor 1.1 höher gewählt, als der Wert, bei dem die Selbstzündtemperatur festgelegt ist.

Der gasförmige erste Brennstoff kann ein beliebiges Gas, wie Biogas, Erdgas, Butangas oder Propangas, oder ein Gemisch davon sein. Als zweiter Brennstoff wird beispielsweise Diesel oder ein Brennstoff mit ähnlich hoher Zündneigung gewählt.

Das Verbrennungsluftverhältnis λ des Brennstoff-Luft-Gemischs ist vorzugsweise variabel, so dass für jeden Arbeitspunkt der Brennkraftmaschine ein vorteilhaftes Verbrennungsluftverhältnis λ eingestellt werden. Dieses wird vorzugsweise in Abhängigkeit einer an der Brennkraftmaschine anliegenden Last geändert, wobei für tiefere Lasten ein höheres Verbrennungsluftverhältnis λ gewählt wird.

Bei Minimallast wird die Zufuhr des ersten Brennstoffs vorzugsweise unterbunden, so dass die Energie für den Betrieb bei Minimallast ausschliesslich durch den zweiten Brennstoff bereitgestellt wird. Die Zufuhr von Luft muss hingegen nicht gedrosselt werden, weshalb Ansaugverluste vorteilhaft vermieden werden können. Auf entsprechende Drosselungselemente im Luftkanal kann daher verzichtet werden. Durch die Vermeidung von Drosselungselementen und Zündkerzen wird ein besonders einfacher Aufbau der Brennkraftmaschine erzielt, die zudem einen geringen Wartungsaufwand verursacht.

Möglich ist hingegen eine Steuerung der Luftzufuhr, um ein optimales Verbrennungsluftverhältnis λ für den Betrieb bei Teillast, Minimallast oder im Leerlauf einzustellen. In diesem Fall kann das Mischverhältnis von Luft und dem zweiten Brennstoff eingestellt werden.

Die Zufuhr des zweiten Brennstoffs wird vorzugsweise in Abhängigkeit der an der Brennkraftmaschine anliegenden Last geändert wird, wobei für tiefere Lasten oder tiefe Drehzahlen die Zufuhr des zweiten Brennstoffs erhöht wird, falls dies erforderlich sein sollte. Auf die Zufuhr des gasförmigen ersten Brennstoffs wird in diesem Betriebsbereich vorzugsweise verzichtet.

Die Zufuhr des zweiten Brennstoffs wird vorzugsweise derart geregelt, dass die Energie des zweiten Brennstoffs im Bereich der Minimallast für den Betrieb der Brennkraftmaschine ausreicht. Für den Betrieb bei hoher Last und/oder bei hohen Motordrehzahlen ist die Zufuhr des zweiten Brennstoffs vorzugsweise derart bemessen, dass dessen Energie im Wesentlichen für die Zündung des Brennstoff-Luft-Gemischs bereitgestellt wird, welches aus dem gasförmigen ersten Brennstoff und Luft gebildet wird.

Die Brennkraftmaschine kann daher derart betrieben werden, dass in jedem Arbeitspunkt der geeignete Brennstoff oder das geeignete Gemisch aus dem gasförmigen ersten Brennstoff und dem zweiten Brennstoff verarbeitet wird, wobei Optimierungen auf minimalen Verbrauch oder maximale Leistung möglich sind.

In einer weiteren vorzugsweisen Betriebsart wird die Zufuhr des zweiten Brennstoffs derart geregelt, dass bei hoher Last im Bereich der unteren Motordrehzahlen die Energie für den Betrieb der Brennkraftmaschine im Wesentlichen durch den zweiten Brennstoff bereitgestellt wird. Beim Anfahren eines Fahrzeugs kann die Brennkraftmaschine daher auf die Abgabe eines maximalen Moments optimiert werden.

Der Betrieb der erfindungsgemässen Brennkraftmaschine wird somit anhand des zweiten Brennstoffs vorteilhaft durch einen Dieselverbrennungsprozess eingeleitet und aufrechterhalten.

Die pro Arbeitstakt der Brennkraftmaschine zugeführte Menge des Brennstoff-Luft-Gemischs bestehend aus dem gasförmigen ersten Brennstoff und Luft ist eine Teilmenge des gesamten Brennstoffs, der für einen jeweiligen Betriebspunkt im Kennfeld der Brennkraftmaschine benötigt wird und in den Brennraum eingebracht wird. Das Verhältnis der Menge des zugeführten Brennstoff-Luft-Gemischs bestehend aus dem gasförmigen ersten Brennstoff und Luft zur Gesamtmenge des zugeführten Brennstoffs kann daher vorteilhaft in Abhängigkeit der Betriebsparameter der Brennkraftmaschine, wie der Motortemperatur, der Last und/oder der Motordrehzahl eingestellt werden.

Nachfolgend wird die Erfindung anhand von Zeichnungen näher erläutert. Dabei zeigt:
- Fig. 1: eine erfindungsgemässe Brennkraftmaschine 1 mit einem Brennraum 19, dem über einen Eingangskanal 12 ein Brennstoff-Luft-Gemisch bestehend aus einem gasförmigen ersten Brennstoff G und Luft S zuführbar ist und dem über eine Einspritzdüse 13 ein zweiter Brennstoff D zuführbar ist;
- Fig. 2: eine erfindungsgemässe Brennkraftmaschine 1 mit einem Brennraum 19, dem der gasförmige erste Brennstoff G, der zweite Brennstoff D und Luft S getrennt voneinander direkt zuführbar sind; und
- Fig. 3: den Brennraum 19 von Figur 1 mit der Einspritzdüse 13 von unten, die vier Austrittsöffnungen 131, 132, 133, 134 aufweist, durch die der zweite Brennstoff D gleichmässig im Brennraum 19 verteilt wird.

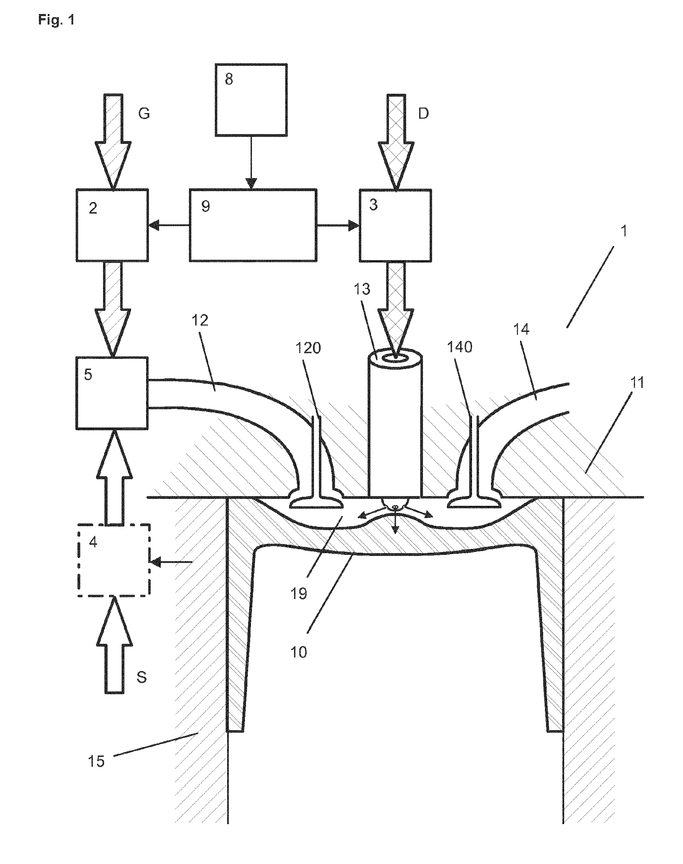

Figur 1 zeigt eine erfindungsgemässe Brennkraftmaschine 1, die vorzugsweise mehrere Zylinder 15 aufweist, in denen je ein Hubkolben 10 in bekannter Weise bewegt wird. Gezeigt ist ferner ein Zylinderkopf 11, mit einem Einlasskanal 12 und einem Auslasskanal 14 sowie Ventilen mit Ventilstösseln 120, 140, mittels denen der Einlasskanal 12 und der Auslasskanal 14 nach den Viertaktprinzip geöffnet und verschlossen werden können. Weiterhin ist eine Einspritzdüse 13 mit mehreren Austrittsöffnungen gezeigt, durch die hindurch ein zweiter Brennstoff D in einen Brennraum 19 einführbar ist, der durch die Oberseite des Hubkolbens 10 im oberen Totpunkt (wie gezeigt) und durch die Unterseite des Zylinderkopfs 11 begrenzt ist.

Der gasförmige erste Brennstoff G, beispielsweise Biogas, Erdgas, Butangas oder Propangas, gelangt durch ein steuerbares erstes Ventil 2 in einen Vergaser 5, dem über eine optional vorgesehene steuerbare Drosselklappe 4 oder ein optionales zweites steuerbares Ventil 4 Luft zuführbar ist. Das resultierende Brennstoff-Luft-Gemisch G+S wird über den Einlasskanal 12 dem Brennraum 19 zugeführt.

Der zweite Brennstoff D, beispielsweise Diesel D oder ein Öl mit ähnlich hoher Zündneigung, wird der Einspritzdüse 13 über ein drittes steuerbares Ventil 3 zugeführt. Die dem Durchlass des gasförmigen ersten Brennstoffs G und des zweiten Brennstoffs D dienenden Ventile 2 und 3 sind mittels einer Steuereinheit 9 steuerbar. Sofern vorhanden, ist auch das steuerbare Ventil 4, welches dem Luftdurchlass dient, mittels der Steuereinheit 9 steuerbar.

Mittels der Steuereinheit 9 können die Ventile 2 und 3 daher derart gesteuert werden, dass die Ventile 2 und 3, gegebenenfalls auch das Ventil 4, in Abhängigkeit des Betriebszustandes und der Betriebsparameter der Brennkraftmaschine 1 steuerbar sind, wie dies oben beschrieben wurde.

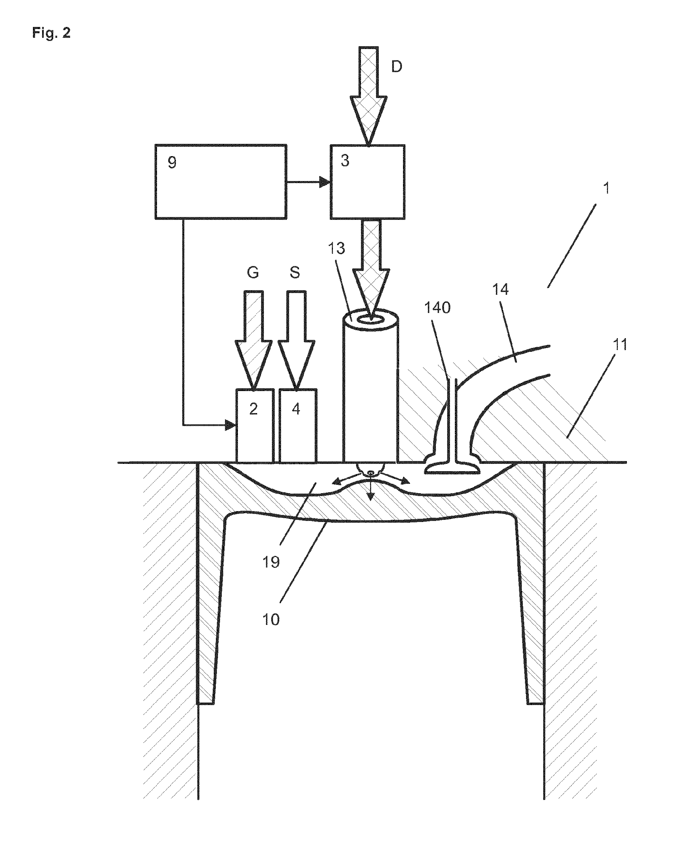

Figur 2 zeigt eine Brennkraftmaschine 1, bei der der gasförmige erste Brennstoff G und Luft S getrennt voneinander in den Brennraum 19 einführbar sind und erst dort gemischt werden.

Das erfindungsgemässe Verfahren ist bei allen Motorentypen, insbesondere Motorentypen, wie sie einleitend beschrieben wurden, vorteilhaft anwendbar.

Das erfindungsgemässe Verfahren ist unabhängig davon anwendbar, wie die genannten Brennstoffe G und D und Luft S in den Brennraum 19 gelangen. Die genannten Brennstoffe G und D und Luft S können auch vorteilhaft über mehrere Kanäle in den Brennraum 19 eingeführt werden, so dass eine optimale Mischung und eine gleichmässige Zündung resultieren. Weiterhin können beliebige gasförmige erste Brennstoffe G und ein zweiter Brennstoff D verwendet werden, soweit dieser die gewünschte Zündneigung aufweist.

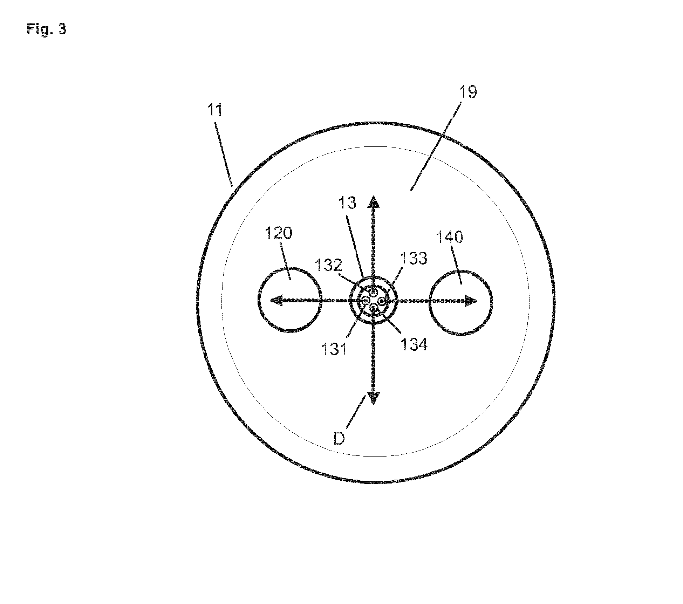

Figur 3 zeigt den Brennraum 19 von Figur 1 mit der Einspritzdüse 13 von unten. Die Einspritzdüse 13 weist vier Austrittsöffnungen 131, 132, 133, 134 auf, durch die der zweite Brennstoff D gleichmässig im Brennraum 19 verteilt wird. Die Anzahl der Austrittsöffnungen kann wahlweise angepasst werden. Es ist möglich axial übereinander an der Einspritzdüse 13 zwei oder mehrere Austrittsöffnungen vorzusehen. Ferner können auch mehrere, beispielsweise drei oder vier Einspritzdüsen 13 eingesetzt werden.

Das erfindungsgemässe Verfahren ist in Verbindung mit weiteren bekannten Verfahren einsetzbar. Insbesondere ist das erfindungsgemässe Verfahren bei Brennkraftmaschinen einsetzbar, die eine Vorrichtung zur Abgasrückführung aufweisen, wie dies in [3], DE4424802C2, beschrieben ist. Ferner kann die Erfindung auch bei Brennkraftmaschinen eingesetzt werden, die einen Turbolader aufweisen, wie dies beispielsweise in [4], DE102009057161A1, beschrieben ist.

### Literaturverzeichnis

[1] Heinz Grohe, Gerhard Russ, Otto- und Dieselmotoren: Arbeitsweise, Aufbau und Berechnung von Zweitakt- und Viertakt-Verbrennungsmotoren, 15. Auflage, Würzburg 2010
[2] DE102011114259A1
[3] DE4424802C2
[4] DE102009057161A1

## Patentansprüche

1. Verfahren zum Betreiben einer insbesondere in Automobilen einsetzbaren Brennkraftmaschine (1), die wenigstens einen Kolben (10), einen Hubkolben oder einen Drehkolben, aufweist, mittels dessen ein Brennstoff-Luft-Gemisch (G+S) in einem Brennraum (19) verdichtet wird und anschliessend gezündet wird, wobei ein gasförmiger erster Brennstoff (G) und Luft (S) gemischt oder ungemischt in den Brennraum (19) einführbar sind, um das Brennstoff-Luft-Gemisch (G+S) bereit zu stellen, **dadurch gekennzeichnet, dass** dem im Brennraum (19) vorliegenden verdichteten Brennstoff-Luft-Gemisch (G+S) ein zweiter Brennstoff (D) zugeführt wird, welcher eine höhere Zündneigung aufweist als der erste Brennstoff (G) und durch den das mit dem zweiten Brennstoff (D) ergänzte Brennstoff-Luft-Gemisch (G+S) gezündet wird.

2. Verfahren nach Anspruch 1, **dadurch gekennzeichnet, dass** das Verbrennungsluftverhältnis λ des Brennstoff-Luft-Gemischs (G+S) variabel ist und in Abhängigkeit einer an der Brennkraftmaschine (1) anliegenden Last geändert wird, wobei für tiefere Lasten ein höheres Verbrennungsluftverhältnis λ gewählt wird.

3. Verfahren nach Anspruch 2, **dadurch gekennzeichnet, dass** bei Minimallast die Zufuhr des ersten Brennstoffs (G) unterbunden wird, so dass die Energie für den Betrieb bei Minimallast ausschliesslich durch den zweiten Brennstoff (D) bereitgestellt wird.

4. Verfahren nach Anspruch 1, 2 oder 3, **dadurch gekennzeichnet, dass** die Zufuhr von Luft (S) und/oder die Zufuhr des ersten Brennstoffs (G) in einem oder mehreren Zugangskanälen (12) erfolgt, die frei von Drosselelementen sind.

5. Verfahren nach einem der Ansprüche 1 - 4, **dadurch gekennzeichnet, dass** die Zufuhr des zweiten Brennstoffs (D) in Abhängigkeit der an der Brennkraftmaschine (1) anliegenden Last geändert wird, wobei für tiefere Lasten oder tiefe Drehzahlen die Zufuhr des zweiten Brennstoffs (D) vorzugsweise erhöht wird.

6. Verfahren nach Anspruch 5, **dadurch gekennzeichnet, dass** die Zufuhr des zweiten Brennstoffs (D) derart geregelt wird, dass die Energie des zweiten Brennstoffs (D) im Bereich der Minimallast für den Betrieb der Brennkraftmaschine (1) ausreicht oder dass die Energie des zweiten Brennstoffs (D) bei hoher Last und/oder bei hohen Motordrehzahlen derart bemessen ist, dass im Wesentlichen die für die Zündung des Brennstoff-Luft-Gemischs (G+S) erforderliche Energie bereitgestellt wird.

7. Verfahren nach Anspruch 5 oder 6, **dadurch gekennzeichnet, dass** die Zufuhr des zweiten Brennstoffs (D) derart geregelt wird, dass bei hoher Last im Bereich der unteren Motordrehzahlen die Energie für Betrieb der Brennkraftmaschine (1) im Wesentlichen durch den zweiten Brennstoff (D) bereitgestellt wird.

8. Verfahren nach einem der Ansprüche 1 - 7, **dadurch gekennzeichnet, dass** der Betrieb der Brennkraftmaschine (1) anhand des zweiten Brennstoffs (D) durch einen Dieselverbrennungsprozess eingeleitet und aufrechterhalten wird.

9. Verfahren nach einem der Ansprüche 1 - 8, **dadurch gekennzeichnet, dass** die pro Arbeitstakt der Brennkraftmaschine (1) zugeführte Menge des Brennstoff-Luft-Gemischs (G+S) bestehend aus dem gasförmigen ersten Brennstoff (G) und Luft (S) eine Teilmenge des gesamten Brennstoffs ist, der für einen jeweiligen Betriebspunkt im Kennfeld der Brennkraftmaschine (1) benötigt wird und in den Brennraum (19) eingebracht wird.

10. Verfahren nach einem der Ansprüche 1 - 9, **dadurch gekennzeichnet, dass** das Verhältnis der Menge des zugeführten Brennstoff-Luft-Gemischs (G+S) bestehend aus dem gasförmigen ersten Brennstoff (G) und Luft (S) zur Gesamtmenge des zugeführten Brennstoffs in Abhängigkeit der Motortemperatur, der Last und/oder der Motordrehzahl geregelt wird.

11. Verfahren nach einem der Ansprüche 1 - 10, **dadurch gekennzeichnet, dass** das Verdichtungsverhältnis der Brennkraftmaschine (1) derart gewählt ist, dass das Brennstoff-Luft-Gemisch (G+S) bestehend aus dem gasförmigen ersten Brennstoff (G) und Luft (S) so hoch komprimiert wird, dass die Selbstzündtemperatur des zweiten Brennstoffs (D) erreicht ist.

12. Verfahren nach einem der Ansprüche 1 - 11, **dadurch gekennzeichnet, dass** der zweite Brennstoff (D) über eine oder mehrere Einspritzdüsen (13), die eine oder mehrere Austrittsöffnungen (131, 132, 133, 134) aufweisen, in den Brennraum (19) eingeführt wird und/oder dass der erste Brennstoff (G) und Luft (S) über getrennte Kanäle oder einen gemeinsamen Kanal (120) in den Brennraum (19) eingeführt werden.

13. Brennkraftmaschine (1) insbesondere für Automobile geeignet zur Durchführung des Verfahrens nach einem der Ansprüche 1 - 12 mit wenigstens einem innerhalb eines Zylinders drehbaren oder verschiebbaren Kolben (10) mittels dessen ein Brennstoff-Luft-Gemisch (G+S), welches aus einem gasförmigen ersten Brennstoff (G) und Luft (S) besteht, in einem Brennraum (19) verdichtet und anschliessend durch Zufuhr eines zweiten Brennstoffs (D) gezündet werden kann, welcher eine höhere Zündneigung aufweist als der erste Brennstoff (G).

14. Brennkraftmaschine (1) nach Anspruch 13, **dadurch gekennzeichnet, dass** der gasförmige erste Brennstoff (G) und Luft (S) über getrennte Kanäle oder gemischt über einen gemeinsamen Kanal (12) in den Brennraum (19) einführbar sind und dass der zweite Brennstoff (D) über eine oder mehrere Einspritzdüsen (13) in den Brennraum (19) einspritzbar ist, die eine oder mehrere Austrittsöffnungen (131, 132, 133, 134) aufweisen.

15. Brennkraftmaschine (1) nach Anspruch 14, **dadurch gekennzeichnet, dass** eine Steuereinheit (9) vorgesehen ist, mittels der Ventile (2, 3, 4) steuerbar sind, durch die hindurch der gasförmige erste Brennstoff (G), der zweite Brennstoff (D) und gegebenenfalls Luft (S) in den Brennraum (19) einführbar sind.
